# FASCICULE DE BREVET EUROPEEN

(11) **EP 4 028 644 B1**
(45) Date de publication et mention de la délivrance du brevet: **07.06.2023**
(21) Numéro de dépôt: 20785804.4
(22) Date de dépôt: 11.09.2020
(51) Int. Cl.: F01D 11/12

(54) **ANNEAU D'ÉTANCHÉITÉ DE TURBOMACHINE**
DICHTRING FÜR EINE TURBOMASCHINE
TURBOMACHINE SEAL RING

(30) Priorité: 13.09.2019 FR 1910134
(43) Date de publication de la demande: 20.07.2022
(73) Titulaire: SAFRAN AIRCRAFT ENGINES, 75015 Paris (FR)
(72) Inventeur: CANELLE, Etienne Gérard Joseph, 77550 Moissy-Cramayel (FR); BUNEL, Jacques Marcel Arthur, 77550 Moissy-Cramayel (FR); GIARDINI, Bruno, 77550 Moissy-Cramayel (FR)
(74) Mandataire: Gevers & Orès
(86) Numéro de dépôt international: PCT/FR2020/051570
(87) Numéro de publication internationale: WO 2021/048505

(56) Documents cités:
- EP-A1- 1 840 339
- EP-A1- 3 090 138
- EP-A1- 3 095 958
- EP-A1- 3 587 739
- FR-A1- 3 016 391
- FR-A1- 3 058 458
- US-A1- 2005 002 779

## Description

### Domaine technique de l'invention

La présente invention concerne un anneau d'étanchéité de turbomachine, et en particulier de turbine de turbomachine, et une turbomachine comportant un tel anneau d'étanchéité.

### Arrière-plan technique

L'arrière-plan technique comprend notamment les documents FR-A1-3 058 458, EP-A1-3 095 958, EP-A1-3 090 138 et US-A2-2005/002779.

Une turbine de turbomachine comprend un ou plusieurs étages comportant chacun un distributeur formé d'une rangée annulaire d'aubes fixes portées par un carter de la turbine, et une roue à aubes montée rotative en général en aval du distributeur. La roue est entourée par un anneau d'étanchéité qui est sectorisé et formé par des secteurs qui sont disposés circonférentiellement bout à bout et qui sont fixés au carter de la turbine. Chaque secteur d'anneau comprend en général un support annulaire qui porte un revêtement annulaire de matière abradable fixé sur la surface interne du support. Ce revêtement est par exemple du type en nid d'abeille et est destiné à s'user par frottement sur des léchettes annulaires externes des aubes de la roue, pour former un joint d'étanchéité à labyrinthe et minimiser les jeux radiaux entre la roue et les secteurs d'anneau.

Chaque secteur d'anneau comprend à ses extrémités axiales amont et aval des éléments de fixation au carter. Chaque secteur d'anneau peut comprendre à son extrémité amont un rebord circonférentiel de fixation par accrochage sur le carter de turbine.

Dans la présente demande, les expressions « amont » et « aval » font référence à l'écoulement des gaz dans la turbomachine, et par exemple aux gaz de combustion dans la veine de turbine de la turbomachine.

En fonctionnement, le carter de turbine est exposé à des températures très importantes susceptibles d'affecter sa durée de vie. Pour limiter l'impact de ces températures sur le carter, il est connu de le protéger par des écrans thermiques qui servent en général de déflecteurs évitant ainsi un impact direct sur le carter du flux de gaz chaud s'écoulant dans la veine de la turbine.

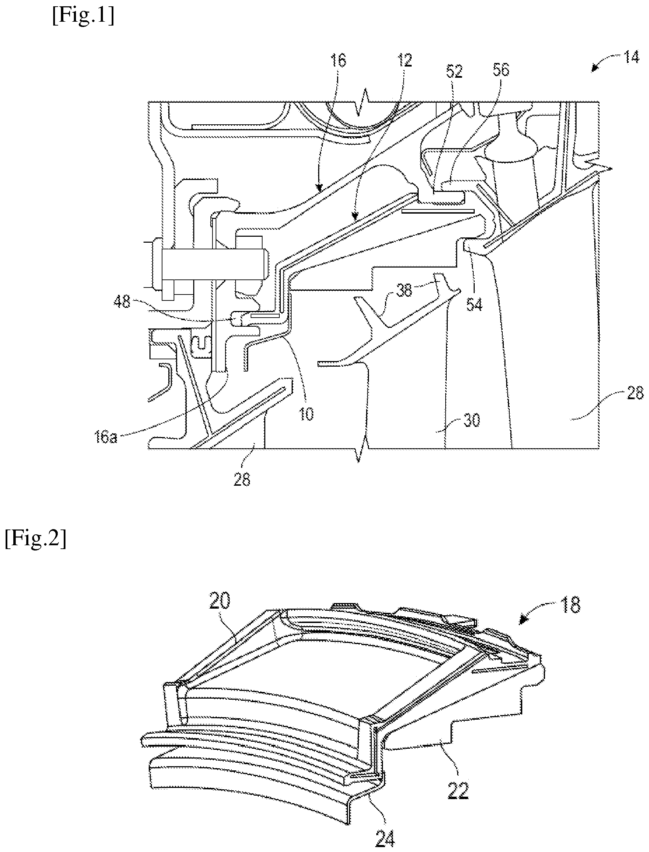

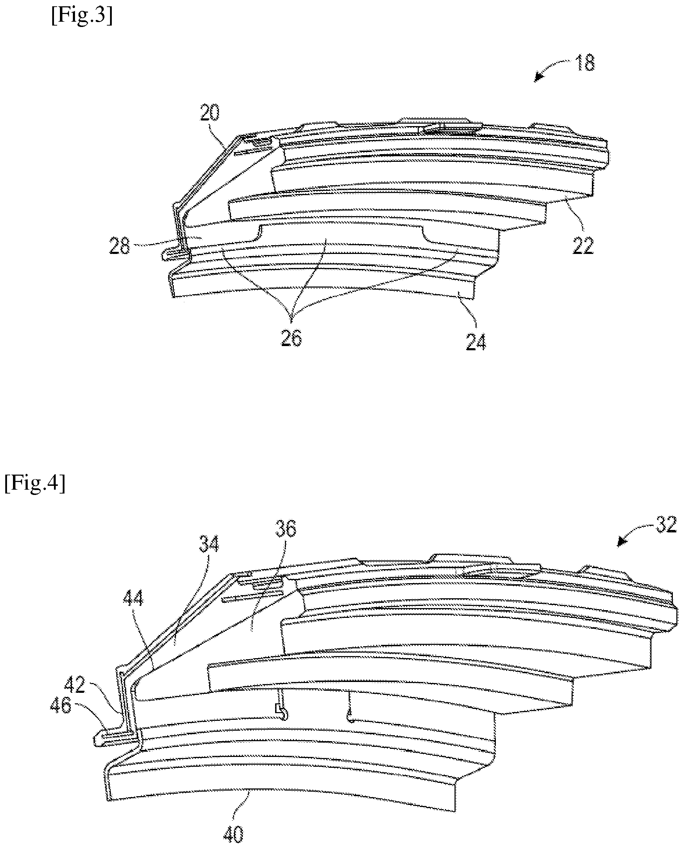

Les figures 1 à 3 illustrent l'exemple d'une tôle 10 de protection thermique portée par un anneau d'étanchéité 12 d'une turbine 14 de turbomachine et protégeant une partie 16a d'un carter 16 de cette turbine. Les figures 2 et 3 montrent un secteur d'anneau 18 qui comprend un secteur de support 20, un secteur de revêtement abradable 22 et un secteur de tôle 24.

Le secteur de tôle 24 s'étend sur toute l'étendue circonférentielle du secteur de support 20 et est fixé à ce dernier par brasage. La figure 3 représente la zone de brasage 26 du secteur de tôle 24 sur une face 28 du secteur de support 20. Cette zone 26 s'étend sur toute l'étendue circonférentielle du secteur de tôle 24.

En fonctionnement, des amorces de criques peuvent apparaître aux extrémités circonférentielles du secteur de tôle 24. Elles peuvent se propager et conduire au détachement de morceaux de tôle dans la veine de turbine. Les fortes sollicitations subies à ces extrémités, par le joint brasé et par le secteur de tôle lui-même, sont dues principalement aux gradients de température entre les différentes zones et à la différence de coefficient de dilatation entre les matériaux du support et de la tôle.

Une solution simple, efficace et économique a ainsi été recherchée pour améliorer la tenue de ce type de tôle.

### Résumé de l'invention

La présente invention concerne un anneau d'étanchéité de turbomachine, ayant un axe de révolution et comprenant :
- un support annulaire qui comporte des éléments de fixation et/ou d'accrochage configurés pour coopérer avec un élément de stator de la turbomachine,
- un revêtement annulaire en matériau abradable qui est porté par ledit support, et
- une tôle annulaire de protection thermique qui est portée par ledit support,

ledit anneau étant sectorisé et comprenant une pluralité de secteurs d'anneau disposés circonférentiellement les uns à côté des autres autour dudit axe, chaque secteur d'anneau comportant un secteur de support, un secteur de revêtement et un secteur de tôle, chaque secteur de tôle comportant une patte plane plaquée contre une face du secteur de support correspondant et fixée sur cette face par brasage,
caractérisé en ce que ladite patte est insérée dans une fente traversante dudit secteur de support afin d'améliorer sa tenue en fonctionnement.

Le secteur de tôle, en plus d'être brasé sur le secteur de support, est ainsi engagé dans une fente du secteur de support. La patte du secteur de tôle est brasée sur la face du secteur de support et peut l'être également dans la fente de ce secteur de support. Le brasage et l'insertion de la patte permet d'améliorer sa tenue mécanique en fonctionnement et limite le risque de détachement accidentel de la tôle.

L'anneau selon l'invention peut comprendre une ou plusieurs des caractéristiques suivantes, prises isolément les unes des autres ou en combinaison les unes avec les autres :
- ledit support comprend une première paroi annulaire s'étendant sensiblement perpendiculairement audit axe et dont la périphérie externe est reliée à une seconde paroi cylindrique ou tronconique sur laquelle est fixée ledit revêtement, et dont la périphérie interne est reliée à un rebord cylindrique de fixation, ladite patte de chaque secteur de tôle étant appliquée contre une face libre, de préférence aval, d'un secteur de la première paroi et insérée dans une fente traversante de la seconde paroi d'un secteur ;
- la tôle a en section axiale une forme générale en S et comprend une paroi annulaire médiane reliée à deux rebords annulaires s'étendant sensiblement parallèlement dans des directions opposées, ladite patte de chaque secteur de tôle s'étendant dans le prolongement d'un des rebords de ce secteur de tôle ;
- ladite paroi médiane de la tôle s'étend à distance et à l'intérieur dudit rebord de fixation dudit support ;
- les extrémités circonférentielles au niveau du raccordement de ladite patte au secteur de tôle sont aménagées pour limiter le risque de concentration de contraintes en fonctionnement ;
- ladite face du secteur de support comprend une rainure qui s'étend de manière tangentielle ou circonférentielle par rapport audit axe et qui est recouverte par ladite patte et/ou par ladite bande de matière, cette rainure étant configurée pour limiter la propagation de la brasure lors de la fixation du secteur de tôle sur le secteur de support ;
- la patte de chaque secteur de tôle a une forme générale rectangulaire et a une étendue circonférentielle autour dudit axe représentant au plus 30% de l'étendue circonférentielle du secteur de tôle ;
- la fente de chaque secteur de support a une orientation générale circonférentielle autour dudit axe et a une étendue circonférentielle représentant au plus 30% de l'étendue circonférentielle du secteur de support ;
- ledit revêtement prend appui voire est brasé sur la patte de chaque secteur de tôle ; et
   -- ledit élément de stator est un carter et/ou un distributeur.

La présente invention concerne également une turbomachine, comportant au moins un anneau d'étanchéité tel que décrit ci-dessus, en particulier dans une turbine.

### Brève description des figures

L'invention sera mieux comprise et d'autres détails, caractéristiques et avantages de l'invention apparaîtront à la lecture de la description suivante faite à titre d'exemple non limitatif et en référence aux dessins annexés, dans lesquels :
[Fig. 1] la figure 1 est une demi-vue schématique partielle en coupe axiale d'une turbine de turbomachine ;
[Fig. 2] la figure 2 est une vue schématique en perspective d'un secteur d'anneau d'étanchéité selon la technique antérieure ;
[Fig. 3] la figure 3 est une autre vue schématique en perspective du secteur d'anneau de la figure 2 ;
[Fig. 4] la figure 4 est une vue schématique en perspective d'un secteur d'anneau d'étanchéité selon l'invention ;
[Fig. 5] la figure 5 est une vue à plus grande échelle d'un détail de la figure 4,
[Fig. 6] la figure 6 est une vue schématique en perspective et en coupe axiale du secteur d'anneau de la figure 4,
[Fig. 7] la figure 7 est une vue schématique en perspective d'un secteur de tôle du secteur d'anneau de la figure 4,
[Fig. 8] la figure 8 est une vue schématique en perspective d'un secteur de support du secteur d'anneau de la figure 4,
[Fig. 9] la figure 9 est une autre vue schématique en perspective du secteur de support du secteur d'anneau de la figure 4,
[Fig. 10] la figure 10 est une vue schématique en perspective et en coupe axiale du secteur de support du secteur d'anneau de la figure 4,
[Fig. 11] la figure 11 est une vue à plus grande échelle d'un détail de la figure 9, et
[Fig. 12] la figure 12 est une vue schématique en perspective du secteur d'anneau de la figure 4 et illustre.

### Description détaillée de l'invention

Les figures 1 à 3 ont été brièvement décrites dans ce qui précède et illustrent l'art antérieur à la présente invention.

Les figures 4 et suivantes illustrent un mode de réalisation d'un anneau d'étanchéité selon l'invention qui peut équiper une turbomachine ou une turbine 14 telle que celle représentée partiellement à la figure 1.

La turbine 14 de la figure 1 est une turbine basse-pression d'une turbomachine d'aéronef, cette turbine comportant plusieurs étages comportant chacun un distributeur 28 formé d'une rangée annulaire d'aubes fixes portées par le carter 16 de la turbine, et une roue à aubes 30 montée en aval du distributeur 28 et tournant dans un anneau d'étanchéité 12 fixé au carter 16.

L'anneau 12 est sectorisé et formé de plusieurs secteurs qui sont portés circonférentiellement bout à bout par le carter 16 de la turbine.

Les figures 4 et suivantes montrent un secteur d'anneau 32 et on comprend que l'anneau d'étanchéité selon l'invention comprend plusieurs de ces secteurs 32.

Chaque secteur d'anneau 32 comprend un secteur 34 d'un support cylindrique ou tronconique et un secteur 36 d'un revêtement annulaire de matière abradable fixé par brasage sur la surface radialement interne du secteur de support 34. Le secteur de revêtement 36 est du type en nid d'abeille et est destiné à s'user par frottement sur des léchettes annulaires externes 38 des aubes de la roue 30 pour minimiser les jeux radiaux entre la roue et les secteurs d'anneau 32.

Chaque secteur d'anneau 32 comprend en outre un secteur 40 d'une tôle annulaire de protection thermique qui est fixé au secteur de support 34 par brasage.

Chaque secteur de support 34 comporte des éléments de fixation et/ou d'accrochage configurés pour coopérer avec le carter 16 et/ou un distributeur 28.

Chaque secteur de support 34 comprend par exemple un secteur d'une première paroi annulaire 42 s'étendant sensiblement perpendiculairement à l'axe de révolution de l'anneau. La périphérie externe de ce secteur de paroi 42 est reliée à un secteur d'une seconde paroi 44 cylindrique ou tronconique sur la surface interne de laquelle est fixé le secteur de revêtement 36. La périphérie interne du secteur de paroi 42 est reliée à un secteur 46 d'un rebord cylindrique de fixation qui s'étend axialement vers l'amont et peut être engagé axialement dans une gorge annulaire 48 du carter 16, comme cela est visible à la figure 1.

Le secteur d'anneau 34 est ainsi fixé à son extrémité amont au carter 16 par le biais de ce secteur de rebord 46 qui définit avec le secteur de paroi 42 une partie d'extrémité amont à section en L du secteur d'anneau 32. A son extrémité aval, le secteur de paroi 44 peut comprendre une gorge 50 qui débouche radialement vers l'extérieur et dans laquelle est engagé un crochet cylindrique 52 du carter, comme cela est également visible à la figure 1. Le secteur d'anneau 34 est maintenu plaqué radialement contre ce crochet 52 par l'intermédiaire du distributeur 28 situé en aval. Ce distributeur 28 comprend un premier rebord cylindrique 54 amont et interne qui s'étend à l'intérieur des secteurs d'anneau 32, et un second rebord cylindrique 56 amont et externe qui s'étend à l'extérieur des secteurs d'anneau 32 ainsi que du crochet 52.

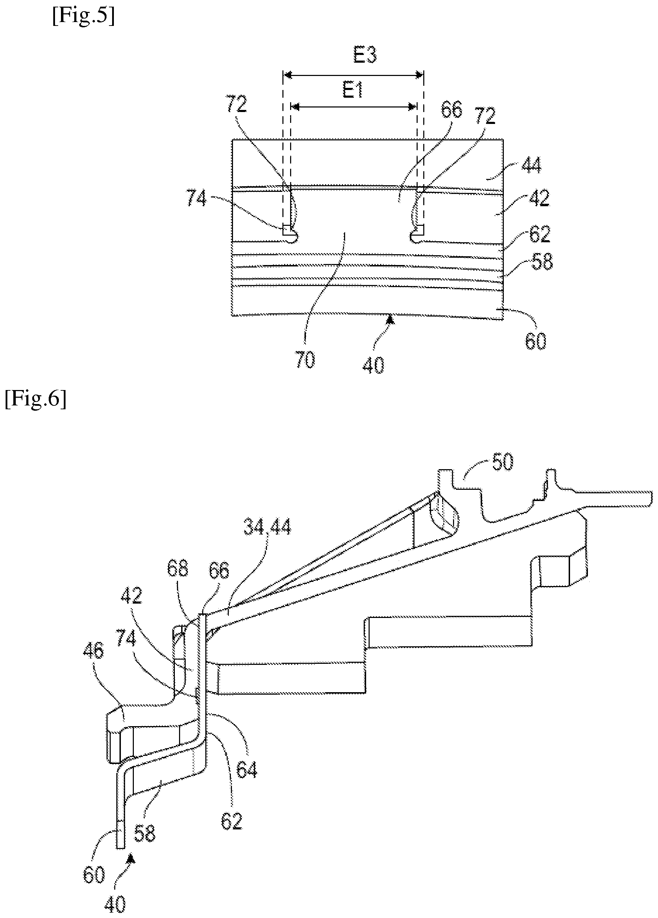

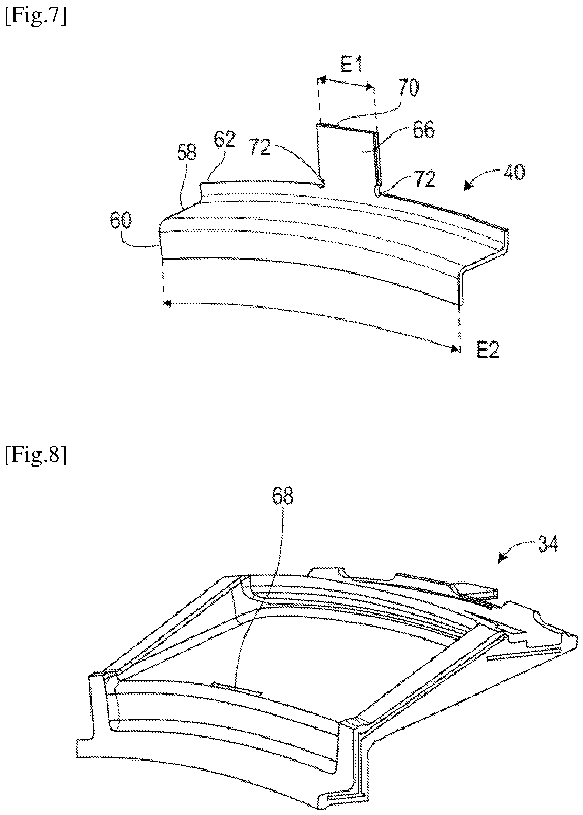

Le secteur de tôle 40 a en section axiale une forme générale en S et comprend une paroi annulaire médiane 58 reliée à deux rebords annulaires 60, 62 s'étendant sensiblement parallèlement dans des directions opposées (figures 6 et 7). Comme on le voit à la figure 1, la paroi médiane 58 a une orientation tronconique autour de l'axe de révolution de l'anneau et est évasée de l'amont vers l'aval. Les rebords 60, 62 ont des orientations sensiblement radiales par rapport à cet axe.

La paroi 58 s'étend à l'intérieur et à distance du secteur de rebord 46 (figure 6) ainsi que de la partie 16a du carter 16 (figure 1). Le rebord 60 s'étend radialement vers l'intérieur depuis la périphérie interne de la paroi 58 (figure 1) et s'étend également à distance et ici en aval de la partie 16a du carter 16.

Le rebord 62 s'étend radialement vers l'extérieur depuis la périphérie externe de la paroi 58 et est plaqué et fixé par brasage contre la face radiale aval 64 du secteur de paroi 42 du secteur d'anneau 32 (figure 6). Par ailleurs, ce rebord 62 comprend un prolongement radial vers l'extérieur formant une patte 66 qui est insérée et traverse une fente 68 formée dans le secteur de paroi 44 (figure 6).

La fente 68 est par exemple réalisée par électroérosion.

Dans l'exemple représenté, la patte 66 est située au milieu du secteur de tôle 40 et de son rebord 62 (en direction circonférentielle par rapport à l'axe précité). La patte 66 a ici une forme générale plane ou plate et à contour rectangulaire. Elle est reliée au rebord 62 par une bande de matière 70, formant un raccordement, dont les extrémités circonférentielles par rapport à l'axe précité sont aménagées pour limiter le risque de concentration de contraintes en fonctionnement (figure 5). En pratique, ces aménagements peuvent être réalisés par perçage d'orifices 72 à contour circulaire aux deux extrémités circonférentielles de la bande 70. Les bords latéraux de la patte 66 sont alors reliés par les bords circulaires de ces orifices 72 au bord libre du rebord 62.

La patte 66 de chaque secteur de tôle 40 peut avoir une étendue circonférentielle E1 autour de l'axe précité qui représente au plus 30% de l'étendue circonférentielle E2 du secteur de tôle (figure 7).

La face 64 du secteur de support 34 comprend de préférence une rainure 74 qui s'étend de manière tangentielle ou circonférentielle par rapport à l'axe précité et qui est recouverte par la patte 66 et/ou par la bande de matière 70 (figure 5). Cette rainure 74 est configurée pour limiter la propagation par capillarité de la brasure lors de la fixation du secteur de tôle 40 sur le secteur de support 34.

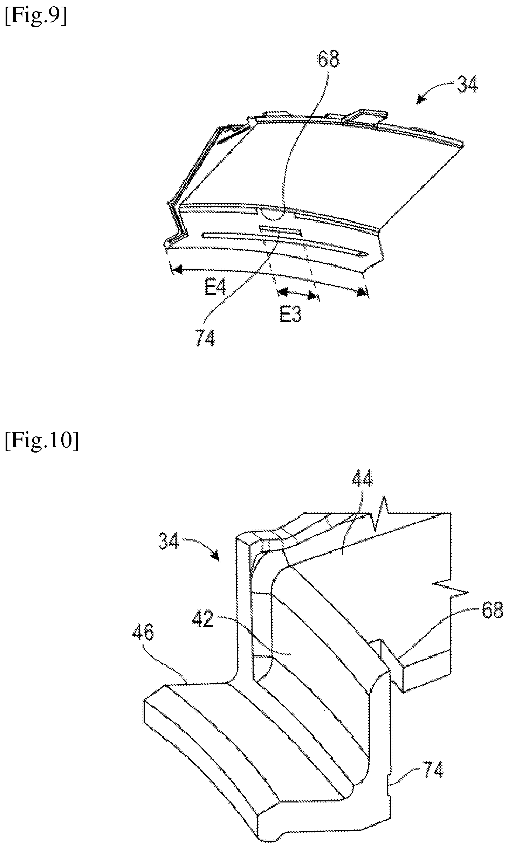

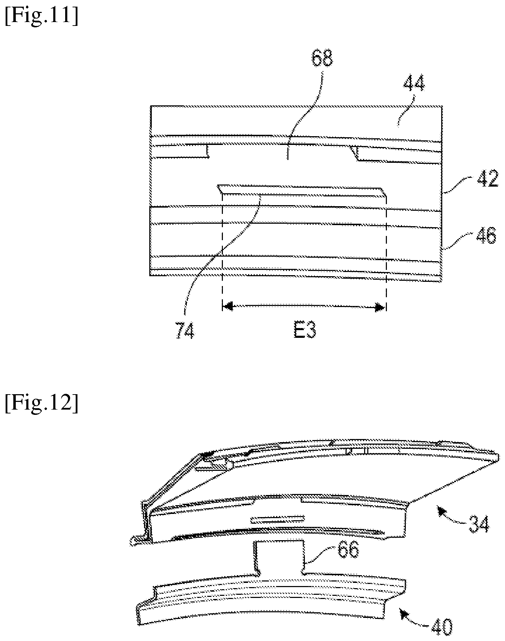

La fente 68 a une orientation générale circonférentielle autour de l'axe et a une étendue circonférentielle E3 représentant au plus 30% de l'étendue circonférentielle E4 du secteur de support 34 (figures 9 et 11).

Dans l'exemple représenté et de manière préférée, E2 est égale à E4, et E1 est inférieure à E3.

Le secteur d'anneau 32 selon l'invention peut être fabriqué ou assemblé de la façon suivante. La figure 12 illustre une étape dans laquelle le secteur de tôle 40 est monté sur le secteur de support 34. Le secteur de tôle 40 doit être déplacé vers le secteur de support par translation dans un plan contenant la patte 66 et passant par la fente 68 du secteur de support 34. Une fois la patte 66 du secteur de tôle 40 dans la fente 68, le secteur de revêtement 36 (non représenté) peut être rapporté sur le secteur de support 34. L'ensemble est alors chauffé à une température prédéterminée pour faire fondre de la brasure préalablement déposée sur des surfaces d'appui des pièces. La patte 66 peut être brasée sur la face 64 dans une zone limitée à cette patte 66 et ne dépassant pas la rainure 74. Le secteur de revêtement 36 est brasé sur le secteur de support 34 et peut prendre appui voire être brasé sur la patte 66 du secteur de tôle 40. En variante, les opérations de brasage pourraient être remplacées par des opérations de soudage.

La présente invention présente de nombreux avantages et notamment :
- limitation de l'étendue de la brasure par la rainure, pour stopper sa diffusion jusqu'aux extrémités circonférentielles du secteur de tôle lors de l'opération de brasage ;
- absence de liaison entre les extrémités circonférentielles du secteur de tôle et le secteur de support, ce qui permet aux deux composants de se cambrer ou se décambrer indépendamment l'un de l'autre sans se contraindre ;
- zone brasée d'une surface totale significative, du fait du brasage possible de la patte, malgré l'absence de brasure aux extrémités circonférentielles du secteur de tôle, et concentrée au centre de la pièce, et donc peu sollicitée ; ce positionnement est aussi bénéfique car situé dans une zone moins chaude ; et
- robustesse de la liaison secteur de support - secteur de tôle grâce à l'effet d'encastrement dans de la patte dans la fente.

## Revendications

1. Anneau d'étanchéité (32) de turbomachine, ayant un axe de révolution et comprenant :
- un support annulaire (34) qui comporte des éléments de fixation et/ou d'accrochage configurés pour coopérer avec un élément de stator de la turbomachine,
- un revêtement annulaire (36) en matériau abradable qui est porté par ledit support, et
- une tôle annulaire (40) de protection thermique qui est portée par ledit support,
ledit anneau étant sectorisé et comprenant une pluralité de secteurs d'anneau disposés circonférentiellement les uns à côté des autres autour dudit axe, chaque secteur d'anneau comportant un secteur de support, un secteur de revêtement et un secteur de tôle, chaque secteur de tôle comportant une patte (66) plane plaquée contre une face (64) du secteur de support correspondant et fixée sur cette face par brasage,
**caractérisé en ce que** ladite patte est insérée dans une fente (68) traversante dudit secteur de support afin d'améliorer sa tenue en fonctionnement.

2. Anneau (32) selon la revendication 1, dans lequel ledit support (34) comprend une première paroi annulaire (42) s'étendant sensiblement perpendiculairement audit axe et dont la périphérie externe est reliée à une seconde paroi (44) cylindrique ou tronconique sur laquelle est fixée ledit revêtement, et dont la périphérie interne est reliée à un rebord cylindrique (46) de fixation, ladite patte (66) de chaque secteur de tôle (40) étant appliquée contre une face libre (64) d'un secteur de la première paroi et insérée dans une fente (68) traversante de la seconde paroi d'un secteur.

3. Anneau (32) selon l'une des revendications précédentes, dans lequel la tôle (40) a en section axiale une forme générale en S et comprend une paroi annulaire médiane (58) reliée à deux rebords annulaires (60, 62) s'étendant sensiblement parallèlement dans des directions opposées, ladite patte (66) de chaque secteur de tôle s'étendant dans le prolongement d'un des rebords de ce secteur de tôle.

4. Anneau (32) selon l'ensemble des revendications 2 et 3, dans lequel ladite paroi médiane (58) de la tôle (40) s'étend à distance et à l'intérieur dudit rebord (46) de fixation dudit support (34).

5. Anneau (32) selon la revendication 3 ou 4, dans lequel les extrémités circonférentielles au niveau du raccordement de ladite patte (66) au secteur de tôle (40) sont aménagées pour limiter le risque de concentration de contraintes en fonctionnement.

6. Anneau (32) selon l'une des revendications précédentes, dans lequel ladite face (64) du secteur de support (34) comprend une rainure (72) qui s'étend de manière tangentielle ou circonférentielle par rapport audit axe et qui est recouverte par ladite patte (66), cette rainure étant configurée pour limiter la propagation de la brasure lors de la fixation du secteur de tôle (40) sur le secteur de support.

7. Anneau (32) selon l'une des revendications précédentes, dans lequel la patte (66) de chaque secteur de tôle (40) a une forme générale rectangulaire et a une étendue circonférentielle autour dudit axe représentant au plus 30% de l'étendue circonférentielle du secteur de tôle.

8. Anneau (32) selon la revendication 1 ou 2, dans lequel la fente (68) de chaque secteur de support (34) a une orientation générale circonférentielle autour dudit axe et a une étendue circonférentielle représentant au plus 30% de l'étendue circonférentielle du secteur de support (34).

9. Anneau (32) selon l'une des revendications précédentes, dans lequel ledit revêtement (36) prend appui voire est brasé sur la patte (66) de chaque secteur de tôle (40).

10. Turbomachine d'aéronef, comportant au moins un anneau (32) selon l'une des revendications précédentes, en particulier dans une turbine.

## Patentansprüche

1. Dichtungsring (32) für eine Turbomaschine, eine Drehachse aufweisend und umfassend:
- einen ringförmigen Träger (34), der Befestigungs- und/oder Einrastelemente umfasst, die konfiguriert sind, um mit einem Statorelement der Turbomaschine zusammenzuwirken,
- eine ringförmige Verkleidung (36) aus abriebfestem Material, die von dem Träger getragen wird, und
- ein ringförmiges Blech (40) für Wärmeschutz, das von dem Träger getragen wird, wobei der Ring unterteilt ist und eine Vielzahl von Ringsektoren umfasst, die umlaufend nebeneinanderliegend um die Achse angeordnet sind, wobei jeder Ringsektor einen Trägersektor, einen Verkleidungssektor und einen Blechsektor umfasst, wobei jeder Blechsektor eine ebene Lasche (66) umfasst, die gegen eine Seite (64) des entsprechenden Trägersektors gedrückt ist und durch Lötung an dieser Seite befestigt ist,
**dadurch gekennzeichnet, dass** die Lasche in einem querverlaufenden Schlitz (68) des Trägersektors eingesetzt ist, um ihren Sitz im Betrieb zu verbessern.

2. Ring (32) nach Anspruch 1, wobei der Träger (34) eine erste ringförmige erste Wand (42) umfasst, die sich im Wesentlichen senkrecht zur Achse erstreckt und deren Außenumfang mit einer zylindrischen oder kegelförmigen zweiten Wand (44) verbunden ist, an der die Verkleidung befestigt ist, und deren Innenumfang mit einem zylindrischen Befestigungsrand (46) verbunden ist, wobei die Lasche (66) jedes Blechsektors (40) an einer freien Seite (64) eines Sektors der ersten Wand angebracht ist und in einem querverlaufenden Schlitz (68) der zweiten Wand eines Sektors eingesetzt ist.

3. Ring (32) nach einem der vorstehenden Ansprüche, wobei das Blech (40) im axialen Schnitt eine allgemeine S-Form aufweist und eine mittlere ringförmige Wand (58) umfasst, die mit zwei ringförmigen Rändern (60, 62) verbunden ist, die sich im Wesentlichen parallel in entgegengesetzte Richtungen erstrecken, wobei sich die Lasche (66) jedes Blechsektors in der Verlängerung eines der Ränder dieses Blechsektors erstreckt.

4. Ring (32) nach der Gesamtheit der Ansprüche 2 und 3, wobei die mittlere Wand (58) des Blechs (40) sich beabstandet und im Inneren des Befestigungsrandes (46) des Trägers (34) erstreckt.

5. Ring (32) nach Ansprüche 3 oder 4, wobei die Umfangsenden an der Verbindungsstelle der Lasche (66) mit dem Blechsektor (40) eingerichtet sind, um das Risiko der Konzentration von Spannungen im Betrieb zu begrenzen.

6. Ring (32) nach einem der vorstehenden Ansprüche, wobei die Seite (64) des Trägersektors (34) eine Nut (72) umfasst, die sich in Bezug auf die Achse auf tangentiale oder umlaufende Weise erstreckt und die von der Lasche (66) verdeckt wird, wobei diese Nut konfiguriert ist, um die Ausbreitung der Lötung bei der Befestigung des Blechsektors (40) an dem Trägersektor zu begrenzen.

7. Ring (32) nach einem der vorstehenden Ansprüche, wobei die Lasche (66) jedes Blechsektors (40) eine allgemeine rechteckige Form aufweist und eine umlaufende Erstreckung um die Achse aufweist, die höchstens 30% der umlaufenden Erstreckung des Blechsektors darstellt.

8. Ring (32) nach Anspruch 1 oder 2, wobei der Schlitz (68) jedes Trägersektors (34) eine allgemeine umlaufende Ausrichtung um die Achse aufweist und eine umlaufende Erstreckung aufweist, die höchstens 30% der umlaufenden Erstreckung des Trägersektors (34) darstellt.

9. Ring (32) nach einem der vorstehenden Ansprüche, wobei die Verkleidung (36) auf der Lasche (66) jedes Blechsektors (40) aufliegt, sogar gelötet ist.

10. Turbomaschine eines Luftfahrzeugs, umfassend mindestens einen Ring (32) nach einem der vorstehenden Ansprüche, insbesondere in einer Turbine.

## Claims

1. A turbomachine sealing ring (32) having an axis of revolution and comprising:
- an annular support (34) which comprises fastening elements and/or hooking elements configured to cooperate with a stator element of the turbomachine,
- an annular coating (36) made of abradable material which is carried by said support, and
- an annular thermal protection plate (40) which is carried by said support,
said ring being sectorised and comprising a plurality of ring sectors arranged circumferentially next to one another about said axis, each ring sector comprising a support sector, a coating sector and a plate sector, each plate sector comprising a flat tab (66) pressed against a face (64) of the corresponding support sector and fixed to this face by brazing,
**characterised in that** said tab is inserted into a through-slot (68) in said support sector in order to improve its integrity in operation.

2. The ring (32) according to claim 1, wherein said support (34) comprises a first annular wall (42) extending substantially perpendicular to said axis and the outer periphery of which is connected to a second cylindrical or frustoconical wall (44) to which said coating is fixed, and the inner periphery of which is connected to a cylindrical fastening rim (46), said tab (66) of each plate sector (40) being applied against a free face (64) of a sector of the first wall and inserted into a through-slot (68) in the second wall of a sector.

3. The ring (32) according to one of the preceding claims, wherein the plate (40) is generally S-shaped in axial section and comprises a median annular wall (58) connected to two annular rims (60, 62) extending substantially in parallel in opposite directions, said tab (66) of each plate sector extending in the continuation of one of the rims of that plate sector.

4. The ring (32) according to all of claims 2 and 3, wherein said median wall (58) of the plate (40) extends away from and within said fastening rim (46) of said support (34).

5. The ring (32) according to claim 3 or 4, wherein the circumferential ends at the connection of said tab (66) to the plate sector (40) are arranged to limit the risk of stress concentration in operation.

6. The ring (32) according to one of the preceding claims, wherein said face (64) of the support sector (34) comprises a groove (72) which extends tangentially or circumferentially with respect to said axis and which is covered by said tab (66), this groove being configured to limit the spread of the braze when fastening the plate sector (40) to the support sector.

7. The ring (32) according to one of the preceding claims, wherein the tab (66) of each plate sector (40) is generally rectangular in shape and has a circumferential extent around said axis representing at most 30% of the circumferential extent of the plate sector.

8. The ring (32) of claim 1 or 2, wherein the slot (68) of each support sector (34) has a generally circumferential orientation about said axis and has a circumferential extent representing at most 30% of the circumferential extent of the support sector (34).

9. The ring (32) according to one of the preceding claims, wherein said coating (36) bears on or is brazed to the tab (66) of each plate sector (40).

10. An aircraft turbomachine, comprising at least one ring (32) according to one of the preceding claims, in particular in a turbine.
